# EUROPEAN PATENT APPLICATION

(11) **EP 4 755 492 A1**
(43) Date of publication of application: **10.06.2026**
(21) Application number: 24217991.9
(22) Date of filing: 06.12.2024
(51) Int. Cl.: B01D 53/00, B01D 53/04, B01D 53/047, B01D 53/22, B01D 53/26, F25J 1/02

(54) **REGENERATION OF A DRIER AT TWO DIFFERENT PARTIAL PRESSURE LEVELS**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: RICCI, Laura, 94503 Champigny-Sur-Marne (FR); RENOU, Elise, 94503 Champigny-Sur-Marne (FR); LECLERC, Mathieu, 94503 Champigny-Sur-Marne (FR)
(74) Representative: Air Liquide

(57) **Abstract**

Process for treating a gas mixture, comprising drying said gas mixture by adsorption according to an adsorption cycle involving at least one adsorber (6) loaded with adsorbent, said gas mixture comprising moisture as well as a component A,
wherein the adsorption cycle comprises :
- an adsorption phase during which moisture is adsorbed and component A is co-adsorbed as well,
- a regeneration phase comprising a step of regenerating the adsorbent by desorbing moisture as well as component A with a first regeneration stream (E1) comprising component A, at a component A first partial pressure in the adsorber (6), followed by a step of regenerating the adsorbent with a second regeneration stream (E2), at a component A second partial pressure in the adsorber (6) below said first partial pressure, thereby desorbing remaining moisture.

## Description

The invention relates to a process for treating a gas mixture, involving drying said gas mixture by adsorption.

Many gas treatments require a drying operation of the gas mixture fed to the gas treatment installation. This is the case for a process of carbon capture by cryogenics : the water in the feed gas mixture has to be removed in order not to freeze at cold temperatures. When the drying is done by adsorption, a regeneration gas is needed. As the dryers are better regenerated at a lower pressure than the adsorption phase, it is preferable to regenerate with a gas that is already available at a lower pressure.

When drying by adsorption, it is common that a component is co-adsorbed along with the moisture. This is the case for example with carbon dioxide (CO2). When drying a feed gas rich in CO2 at medium pressure, for example between 6 and 30 bara, and regenerating at low pressure, for example between 1 to 4 bara, CO2 desorption occurs, in particular during the depressurization of the adsorber. It can lead to a significant temperature drop in the vessel, the desorption being an endothermic process. Negative temperatures can be reached and the water adsorbed in the pores of the adsorbent can thus freeze. This change of phase inside the pores can break the pore walls, affecting the mechanical integrity of adsorbent beads and reducing the specific surface area, thus the adsorption capacity of the adsorbent.

It is common that the gas mixture is compressed and partially dried by removal of condensed moisture by exchanging heat with a cold medium prior to being fed to the adsorber. In an attempt to avoid such negative temperatures and adsorbent deterioration, the dryer operation temperature during the adsorption phase can be maintained high enough so that the temperature does not drop to a too cold value during the regeneration phase. A solution is to reduce cooling of the gas mixture by said cold medium upstream of the adsorber. However, this would imply a larger dryer, as reduced cooling comes with less moisture condensation. Another solution would be to have the cooling of the gas mixture for removal of condensed moisture followed by a step of heating back. This however implies higher investment costs for the additional heat exchanges. Moreover, a consequence of maintaining a higher dryer operation temperature is a higher temperature at the inlet of the downstream process, for example the cryogenic process. This also comes with higher investment costs for the additional heat exchanges (e.g. increased size of a heat exchanger in the cryogenic section) and/or a larger energy consumption.

There is therefore a need for controlling the temperature while drying a gas mixture by adsorption in a gas treatment process, reducing the impact on the whole upstream and downstream treatment operation chain.

To this purpose, the present invention relates to a process for treating a gas mixture, comprising drying said gas mixture by adsorption according to an adsorption cycle involving at least one adsorber loaded with adsorbent, said gas mixture comprising moisture (for example water) as well as a component A, wherein the adsorption cycle comprises :
- an adsorption phase during which moisture is adsorbed and component A is co-adsorbed as well,
- a regeneration phase comprising a step of regenerating the adsorbent by desorbing moisture as well as component A with a first regeneration stream, at a component A first partial pressure in the adsorber, followed by a step of regenerating the adsorbent with a second regeneration stream, at a component A second partial pressure in the adsorber below said first partial pressure, thereby desorbing remaining moisture.

The higher partial pressure in said component A during the step of regenerating the adsorbent with said first regeneration stream allows to limit the desorption of said component A as required over the whole regeneration phase. With such improved control, a peak of desorption with the associated temperature drop may be avoided or significantly reduced, for example at a beginning of the regeneration phase during depressurization. Detrimental effects of such temperature drop on the adsorbent may thus be limited.

In one embodiment, further component A is desorbed during the step of regenerating the adsorbent with the second regeneration stream.

In one embodiment, the first regeneration stream comprises component A, in particular between 20 and 90 % mol of component A.

In one embodiment, the second regeneration stream comprises component A.

In one embodiment, said component A is carbon dioxide (CO2). In particular, the first partial pressure (CO2 first partial pressure) is comprised between 3 and 18 bar. More particularly, the second partial pressure (CO2 second partial pressure) is comprised between 0 and 9 bar, preferably 0.5 and 9 bar.

In one embodiment, the first regeneration stream comprises between 20 and 90 % mol of CO2.

Alternatively, said component A is carbon monoxide (CO).

In one embodiment, the gas mixture comprises at least one component lighter than component A, such as hydrogen, nitrogen, oxygen, or carbon monoxide if component A is CO2, or such as hydrogen if component A is CO.

In one embodiment, the gas mixture comprises at least one component heavier than component A, such as nitrogen oxides (NOx).

In one embodiment, the gas mixture is a flue gas produced by a combustion.

In one embodiment, the gas mixture comprises between 15 and 95 % mol of carbon dioxide on a dry basis. In particular, the gas mixture comprises between 15 and 50% mol of carbon dioxide on a dry basis.

In one embodiment, the gas mixture comprises between 40 and 95 % mol of carbon dioxide on a dry basis. This could typically be the case for a gas mixture produced by oxyfuel combustion.

In one embodiment, said moisture comprises water, nitric acid or combinations thereof.

In one embodiment, the process comprises providing the gas mixture and feeding the gas mixture to the at least one adsorber. In one embodiment, the gas mixture is fed to a compression system to be compressed, for example between 5 and 30 bar, prior to being fed to the at least one adsorber. The compression system may comprise a compression train comprising at least two compressors and an interstage between two of said at least two compressors, with optional cooling of the compressed gas and partial drying by removal of condensed moisture between said two compressors.

In one embodiment, the compressed gas mixture is partially dried by removal of condensed moisture, in particular by exchanging heat with a cold medium, in particular a cold stream (for example cooling water), prior to being fed to the at least one adsorber.

The process may be part of a process of carbon capture, in particular a process of carbon capture by cryogenics.

In one embodiment, the step of drying said gas mixture by adsorption produces a dried gas mixture. In one embodiment, the process comprises cooling said dried gas mixture, or a gas derived from the dried gas mixture, in a heat exchanger and separating the thus cooled gas mixture by at least one partial condensation step with separation, in at least one phase separator, of a partial condensation liquid product enriched in CO2 with respect to the dried gas mixture, from a partial condensation gas product enriched in the at least one component lighter than CO2. Optionally, said dried gas mixture is compressed prior to being cooled in said heat exchanger. The dried gas mixture may be further cooled in a cooling unit prior to being separated, in particular the compressed dried gas mixture is cooled in said cooling unit prior to being cooled in said heat exchanger.

In one embodiment, the step of drying said gas mixture by adsorption produces a dried gas mixture and the process comprises cooling said dried gas mixture in a heat exchanger and separating the cooled gas in a wash column to form a feed stream containing proportionally less of the at least one component heavier than CO2 than the dried gas mixture, said feed stream being cooled in said heat exchanger for obtaining a cooled gas mixture and said cooled gas mixture is separated by a least one partial condensation step with separation in at least one phase separator of a partial condensation liquid product enriched in CO2 with respect to the feed stream from a partial condensation gas product enriched in the at least one component lighter than CO2. Optionally, said feed stream is compressed prior to being cooled in said heat exchanger. The feed stream may be further cooled in a cooling unit prior to being separated, in particular the compressed feed stream is cooled in said cooling unit prior to being cooled in said heat exchanger.

In one embodiment, at least part of the partial condensation gas product enriched in the at least one component lighter than CO2 is separated through a membrane, producing a CO2 enriched permeate and a CO2 depleted retentate. Optionally, said at least part of the partial condensation gas product enriched in the at least one component lighter than CO2 is warmed in the heat exchanger prior to being separated through said membrane.

In one embodiment, the CO2 enriched permeate is used as said second regeneration stream. The CO2 depleted retentate may for example be vented to the atmosphere.

Alternatively, the process comprises a step of letting down the pressure of at least part of said partial condensation gas product enriched in the at least one component lighter than CO2 and using said partial condensation gas product whose pressure has been let down as said second regeneration stream.

In one embodiment, the adsorber undergoing the step of regenerating the adsorbent with the second regeneration stream produces a tail gas comprising desorbed moisture and said tail gas is recycled to the feed of the compression system with the gas mixture.

In one embodiment, said partial condensation liquid product enriched in CO2 is separated in a stripping column, forming a stripping gas product enriched in the at least one component lighter than CO2 and a stripping liquid product enriched in CO2.

In one embodiment, the stripping gas product enriched in the at least one component lighter than CO2 is used as said first regeneration stream, optionally after being warmed up in the heat exchanger.

In one embodiment, the regeneration phase comprises a step of switching from the stripping gas product fed to the adsorber as said first regeneration stream to the second regeneration stream fed to said adsorber as said second regeneration stream.

In one embodiment, the adsorber undergoing the step of regenerating the adsorbent with a first regeneration stream produces an off gas comprising the desorbed moisture as well as desorbed component A and said off gas is recycled to the interstage of the compression train.

In one embodiment, said adsorption cycle is a temperature swing adsorption (TSA) cycle. Said first regeneration stream and/or said second regeneration stream is advantageously heated by a heater.

In one embodiment, the adsorbent is at an initial temperature of said adsorbent at a beginning of the regeneration phase and said adsorbent thereafter undergoes a temperature drop, wherein said step of regenerating the adsorbent with said first regeneration stream is continued at least until the adsorbent reaches again said initial temperature.

In one embodiment, the step of regenerating the adsorbent with the first regeneration stream is performed at a first pressure in the adsorber and the step of regenerating the adsorbent with a second regeneration stream is performed at a second pressure in the adsorber below said first pressure. In particular, the regeneration phase comprises :
- depressurizing the adsorber to the first pressure and regenerating the adsorbent with the first regeneration stream,
- following the step of regenerating the adsorbent with the first regeneration stream, depressurizing the adsorber to the second pressure and regenerating the adsorbent with the second regeneration stream and,
- following the step of regenerating the adsorbent with the second regeneration stream, a step of repressurizing the adsorber.
Typically, the adsorption phase is performed at a high pressure of the adsorption cycle, said second pressure being a low pressure of the adsorption cycle, said first pressure being an intermediate pressure of the adsorption cycle. In particular, the step of depressurizing the adsorber to the first pressure is performed from said high pressure to said intermediate pressure, the step of depressurizing the adsorber to the second pressure is performed from said intermediate pressure to said low pressure and said step of repressurizing the adsorber is performed from said low pressure to said high pressure. Said first pressure may be comprised between 7 and 20 bara. Said second pressure may be comprised between 1 and 10 bara.

In one embodiment, the step of regenerating the adsorbent with the second regeneration stream comprises cooling the adsorbent. The step of regenerating the adsorbent with the second regeneration stream optionally comprises heating the adsorbent prior to cooling the adsorbent.

In one embodiment, the adsorption cycle involves at least two adsorbers. In particular, each of the at least two adsorbers is undergoing the adsorption cycle, with a time interval between the adsorbers. The time interval between two following adsorbers is typically equal to the duration of the adsorption cycle divided by the number of adsorbers.

In one embodiment, the adsorption phase comprises a first step of adsorption comprising providing to a first adsorber, once it is starting the adsorption phase, a portion of the gas mixture, in particular between 5 and 50 % of the gas mixture, preferably between 5 and 20%, and providing to a second adsorber the remainder of the gas mixture, in particular between 50 and 95% of the gas mixture, preferably between 80 and 95%. The first step of adsorption is advantageously continued until the adsorbent in said first adsorber is substantially saturated with component A. In one embodiment, said first adsorber produces a first dried stream and said second adsorber produces a second dried stream and the first dried stream is mixed with the second dried stream to produce said dried gas mixture. In one embodiment, the adsorption phase comprises a second step of adsorption that is following the first step of adsorption, said second step of adsorption comprising providing to each of said first adsorber and said second adsorber about 50% of the gas mixture, said first and second adsorbers being advantageously saturated in component A. In particular, said second step of adsorption is performed as said second adsorber is terminating the adsorption phase. In particular, the second adsorber having terminated the adsorption phase undergoes the regeneration phase, while providing to the first adsorber 100% of the gas mixture for drying by adsorption.

In one embodiment, the adsorbent comprises one of activated alumina, silica gel, zeolite, for example of the FAU type, and a combination thereof.

In one embodiment, the at least one adsorber comprises at least one axial adsorber. That is in particular to say that the gas mixture circulates vertically from bottom to top or from top to bottom inside the adsorber.

In one embodiment, the at least one adsorber comprises at least one radial adsorber. That is in particular to say that the gas mixture circulates centripetally or centrifugally inside the adsorber.
Figure 1 shows a carbon capture installation comprising a dryer in a step of being regenerated as in the state of the art,
Figures 2 and 3 show an adsorption cycle according to one embodiment of the invention,
Figure 4 shows a step of regenerating the dryer with a first regeneration stream according to one embodiment of the invention,
Figure 5 shows a step of regenerating the dryer with a second regeneration stream according to this embodiment.

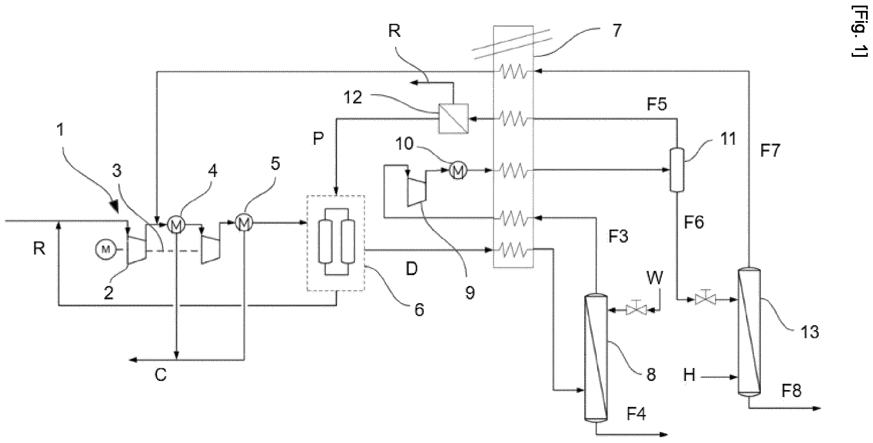

Figure 1 describes an installation comprising a cryogenic section for capturing CO2 from a flue gas mixture. The flue gas is produced by a combustion process, such as in the furnace of a steam methane reformer, an ammonia cracker, a power plant, a cement plant, a lime plant or a glass melting furnace. It comprises CO2, at least one component lighter than CO2, such as nitrogen, oxygen and carbon monoxide, as well as nitrogen oxides (NOx) as a component heavier than CO2. It also comprises moisture, such as water moisture, and therefore needs to be dried prior to be fed to the cryogenic section.

The flue gas is fed to a compression train 1 comprising two compressors 2 in series linked by a shaft 3, with an interstage cooler 4 between said two compressors for cooling the flue gas compressed at the interstage pressure. The shaft is driven by an engine M. The interstage cooling enables part of the water comprised in the flue gas to be condensed and to reduces the energy consumption for the compression. The compressed gas mixture is further cooled in a cooling water heat exchanger 5 for further removal of water by condensation. A condensate C is removed from both interstage cooling and further cooling. This removal of water by condensation decreases the load on the downstream dryer 6.

The compressed flue gas, whose part of the moisture was condensed, is fed to a drier 6. The drier 6 finally dries the flue gas by temperature swing adsorption before entering the cryogenic section. The dried flue gas D is cooled in a main heat exchanger 7 of the cryogenic section and fed to a wash column 8 to remove NOx from the flue gas. The wash column 8 is fed at the top by a wash stream W, such as liquid CO2. The wash column 8 separates the dried flue gas D into a gaseous feed stream F3 containing proportionally less NOx than the dried flue gas D and a liquid F4 enriched in NOx. This is an example of gas derived from the dried flue gas D or dried gas mixture.

The gaseous feed stream F3 releases its frigories in the main heat exchanger 7, is compressed in a compressor 9, then cooled in a cooling unit 10 and further cooled in the main heat exchanger 7 to a partial condensation temperature, wherein part of the mixture is condensed. A liquid phase F6 being a first product of the partial condensation enriched in CO2 (partial condensation liquid product F6) is separated in a phase separator 11 from a gas phase F5 being a second product of the partial condensation enriched in the at least one component lighter than CO2 (partial condensation gas product F5).

The partial condensation gas product F5 from the phase separator 11 is warmed in the main heat exchanger 7 and separated in a membrane 12 into a CO2 enriched permeate P and a CO2 depleted retentate R.

The partial condensation liquid product F6 from the phase separator 11 is sent to a stripping column 13, for separation into a stripping gas product F7 enriched in the at least one component lighter than CO2 and a stripping liquid product F8, from which lighter components were removed (stripping liquid product enriched in CO2 F8). The stripping column is fed at its bottom with a hot gas H acting as reboil in the stripping column. A suitable hot gas H is for example part of said liquid F8 vaporized. The stripping gas product F7 is withdrawn from the overhead of the stripping column 13 and recycled to the interstage of the compression train 1 after heating in the main heat exchanger 7.

The drier 6 comprises two adsorbers, each of the two being loaded with an adsorbent. Each adsorber is undergoing a temperature swing adsorption cycle with a time interval between two following adsorbers. Said time interval is equal to the duration of one temperature swing adsorption cycle, divided by the number of adsorbers, ie two in the described embodiment. The adsorption cycle comprises an adsorption phase during which moisture from the flue gas is adsorbed. The adsorption phase is performed at a high pressure of the adsorption cycle. The adsorption cycle comprises a regeneration phase for regenerating the adsorbent saturated in moisture by desorbing said moisture, before undergoing the next adsorption phase. The regeneration phase comprises a step of depressurizing the adsorber to a low pressure of the adsorption cycle. The adsorber is regenerated at said low pressure by sending the membrane permeate P as a regeneration stream to the adsorber. Said regeneration stream may be heated prior to being sent to the adsorber (not represented). Since CO2 is co-adsorbed along with moisture, a strong CO2 desorption may occur during regeneration, for example during the depressurization step. The desorption being an endothermic process, this CO2 desorption can lead to a significant temperature drop in the adsorber, reaching the coldest temperature during the adsorption cycle. Negative temperatures can be reached and the water adsorbed in the pores of the adsorbent can thus freeze. To avoid alteration of the adsorbent by freezing of moisture, the drier needs to operate all year long with an adsorption temperature above 37°C, in order to have the coldest temperature during depressurization and regeneration above the freezing temperature.

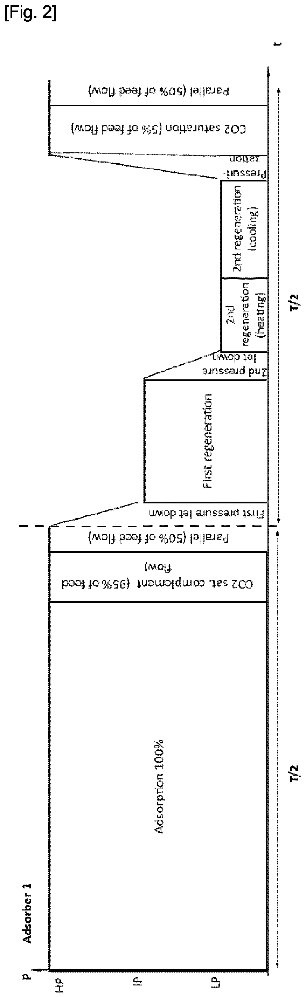

Figure 2, 3, 4 and 5 describe an embodiment of the invention implemented on an installation of the same type as figure 1.

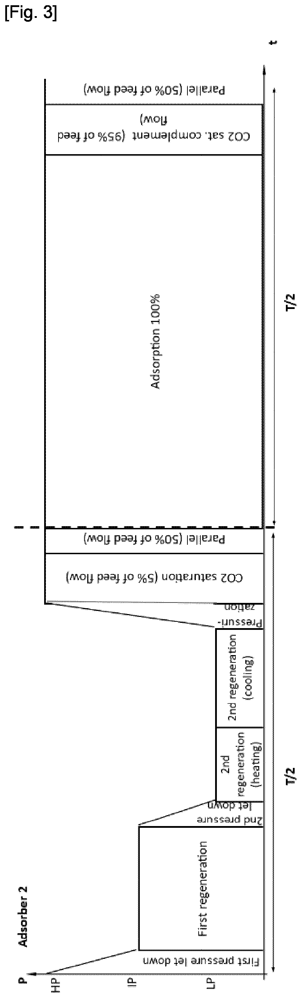

Figure 2 and figure 3 show an adsorption cycle of the drier 6 in this embodiment. Figure 2 shows the cycle followed by one of the two adsorbers, called "first adsorber" in the following description (Adsorber 1) and figure 3 shows the same cycle followed by the other one of the two adsorbers, called "second adsorber" in the following description (Adsorber 2), with a time interval T/2 between the first and second adsorbers. The adsorption cycle comprises an adsorption phase at a high pressure of the cycle (HP). The adsorption cycle comprises a regeneration phase, said regeneration phase following the adsorption phase. The regeneration phase comprises a step of regenerating the adsorbent with a first regeneration stream E1 at an intermediate pressure of the cycle (IP) followed by a step of regenerating the adsorbent with a second regeneration stream E2 at a low pressure of the cycle (LP). The adsorber is first depressurized from the high pressure to the intermediate pressure (first pressure let down) and is regenerated with the first regeneration stream E1. Following this first step of regeneration, the adsorber is fully depressurized from the intermediate pressure to the low pressure (second pressure let down) and is further regenerated with the second regeneration stream E2. During this further regeneration, the adsorbent is first heated (2nd regeneration heating), which is advantageous to increase the desorption but optional, and then cooled (2nd regeneration cooling). The adsorber is repressurized at the end of said regeneration phase (pressurization).

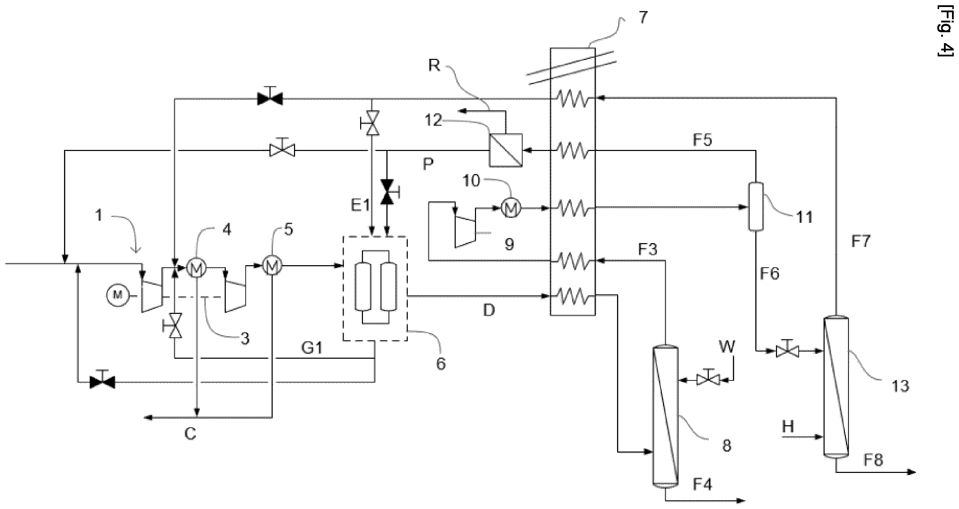

As shown on figure 4, the stripping gas product F7 withdrawn from the overhead of the stripping column 13 at a pressure between 7 and 20 bara is used, after heating in the main heat exchanger 7, as the first regeneration stream E1. Using this stream advantageously comprising CO2 and available at such intermediate pressure allows a regeneration of the adsorbent at a higher CO2 partial pressure. This allows to control the CO2 desorption as required, for example during the first depressurization from the high pressure to an intermediate pressure only. The regeneration with this first stream is advantageously continued such as to evacuate the potentially released frigories for damping out the thermal effects due to the endothermic desorption. This enables a further improved control of the temperature of the adsorbent. The adsorber undergoing the step of regenerating the adsorbent with regeneration stream E1 produces an off gas G1 comprising the desorbed moisture as well as desorbed CO2 and said off gas G1 is recycled to the interstage of the compression train 1. The membrane permeate P is recycled with the flue gas fed to the compression train 1. The installation comprises a set of valves that are actuated such as to channel streams used for regeneration and streams that are recycled.

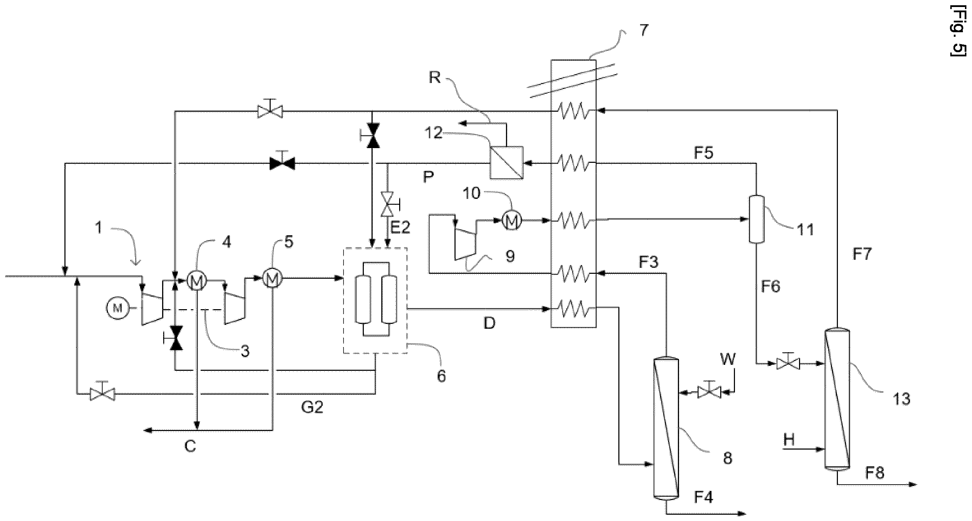

As shown on figure 5, the membrane permeate P is used as the second regeneration stream E2. The valves are actuated to allow a switching from the first regeneration stream E1 to the second regeneration stream E2. The adsorber undergoing the step of regenerating the adsorbent with regeneration stream E2 produces a tail gas G2 comprising desorbed moisture and said tail gas G2 is recycled with the flue gas fed to the compression train 1. Using the permeate available at such lower pressure allows remaining moisture and potentially additional CO2 to be desorbed. The invention proposes therefore a new way of limiting the CO2 desorption over the whole regeneration phase. A peak of CO2 desorption with excessive temperature drop may thus be avoided, for example during the first depressurization. In addition, thanks to the invention, the temperature at the inlet of the adsorbers is related to the cooling water temperature in the cooling water heat exchanger 5 and doesn't have to be controlled. Moreover, the inlet to the cryogenic section is advantageously linked to the atmospheric temperature (for example through the cooling water) instead of being impacted by a higher upstream dryer operation temperature, allowing for cold compression, cold boosting or lower cycle energy consumption. The stripping gas product F7 is recycled to the interstage of the compression train 1.

It is to be noted that the first and second regeneration streams may be available and fed to the adsorber at substantially the same pressure, but may differ in their CO2 content, such that the step of regenerating the adsorbent with the first regeneration stream is performed at a higher CO2 partial pressure than the step of regenerating the adsorbent with the second regeneration stream, for controlling the CO2 desorption rate.

As shown on figure 2, the adsorption phase comprises a first step of providing to the first adsorber, as it is starting its adsorption phase, a minor portion of the drier 6 flue gas feed until most, if not all, of the adsorbent in said first adsorber is saturated with CO2 (CO2 saturation (5% of feed flow)). As shown on figure 3, the remainder majority of said flue gas feed is concomitantly provided to the second adsorber (CO2 sat. complement (95% of feed flow)). While being provided with said minor portion of the flue gas feed, the first adsorber that was freshly regenerated stops, in addition to the moisture, CO2 until saturation. The dried stream coming from the first adsorber is depleted in CO2. As shown on figure 3, the same sequence is valid at a different point in time in the cycle (with a T/2 time interval), when considering the second adsorber starting its adsorption phase and provided with a minor portion of the drier 6 flue gas feed. As it was previously saturated with CO2 in the same conditions as the first adsorber, the second adsorber being provided with the remainder majority of said flue gas feed adsorbs mainly moisture, potentially other impurities from the gas mixture and virtually no CO2, to produce a dried stream as well. The CO2-depleted dried stream coming from the first adsorber (corresponding to the product of said minor portion of the flue gas feed being dried) is then mixed with the dried stream coming from the second adsorber (corresponding to the product of said remaining major portion of the flue gas feed being dried). This allows to limit fluctuations of the CO2 concentration and of the temperature of the dried flue gas D. Providing the first adsorber with a limited amount of the flue gas feed is thus advantageous for controlling the CO2 adsorption and so the associated heat release during the whole adsorption phase. This is in particular important for flue gas feeds having a high CO2 concentration. The adsorption phase comprises a following step of providing to each of said first adsorber and second adsorber about 50% of the flue gas feed (parallel (50% of feed flow)), as the first adsorber was freshly saturated in CO2 (figure 2) and the second adsorber is terminating its adsorption phase (figure 3). Said adsorbers are advantageously both saturated in CO2. This allows a smooth transition between adsorption and regeneration. In particular, the second adsorber terminating its adsorption phase undergoes the regeneration phase thereafter, while providing to the first adsorber 100% of the gas mixture for adsorption of moisture.

## Claims

1. Process for treating a gas mixture, comprising drying said gas mixture by adsorption according to an adsorption cycle involving at least one adsorber (6) loaded with adsorbent, said gas mixture comprising moisture as well as a component A,
wherein the adsorption cycle comprises :
- an adsorption phase during which moisture is adsorbed and component A is co-adsorbed as well,
- a regeneration phase comprising a step of regenerating the adsorbent by desorbing moisture as well as component A with a first regeneration stream (E1), at a component A first partial pressure in the adsorber (6), followed by a step of regenerating the adsorbent with a second regeneration stream (E2), at a component A second partial pressure in the adsorber (6) below said first partial pressure, thereby desorbing remaining moisture.

2. Process according to the preceding claim, wherein the gas mixture is fed to a compression system (1) to be compressed prior to being fed to the at least one adsorber (6) and the compressed gas mixture is partially dried by removal of condensed moisture prior to being fed to the at least one adsorber (6).

3. Process according to one of the preceding claims, wherein said component A is carbon dioxide.

4. Process according to the preceding claim, wherein the gas mixture comprises at least one component lighter than carbon dioxide and the step of drying said gas mixture by adsorption produces a dried gas mixture (D), the process comprising cooling said dried gas mixture (D), or a gas derived therefrom, in a heat exchanger (7) and separating the cooled gas mixture by at least one partial condensation step with separation, in at least one phase separator (11), of a partial condensation liquid product (F6) enriched in carbon dioxide with respect to the dried gas mixture (D), from a partial condensation gas product (F5) enriched in the at least one component lighter than carbon dioxide.

5. Process according to the preceding claim, wherein at least part of the partial condensation gas product (F5) enriched in the at least one component lighter than carbon dioxide is separated through a membrane (12), producing a carbon dioxide enriched permeate (P) and a carbon dioxide depleted retentate (R) and the carbon dioxide enriched permeate (P) is used as said second regeneration stream (E2).

6. Process according to one of claims 4 or 5, comprising a step of letting down the pressure of at least part of said partial condensation gas product (F5) enriched in the at least one component lighter than carbon dioxide and using said partial condensation gas product (F5) whose pressure has been let down as said second regeneration stream (E2).

7. Process according to one of claims 4 to 6, wherein said partial condensation liquid product (F6) enriched in carbon dioxide is separated in a stripping column (13), forming a stripping gas product (F7) enriched in the at least one component lighter than carbon dioxide and a stripping liquid product (F8) enriched in carbon dioxide and the stripping gas product (F7) enriched in the at least one component lighter than carbon dioxide is used as said first regeneration stream (E1).

8. Process according to the preceding claim, wherein the regeneration phase comprises a step of switching from the stripping gas product (F7) fed to the adsorber (6) as said first regeneration stream (E1) to the second regeneration stream (E2) fed to said adsorber (6).

9. Process according to one of the preceding claims, wherein said adsorption cycle is a temperature swing adsorption cycle.

10. Process according to one of the preceding claims, wherein the at least one adsorber (6) comprises at least one axial adsorber or at least one radial adsorber.

11. Process according to one of the preceding claims, wherein the adsorbent is at an initial temperature of said adsorbent at a beginning of the regeneration phase and said adsorbent thereafter undergoes a temperature drop, wherein said step of regenerating the adsorbent with said first regeneration stream (E1) is continued at least until the adsorbent reaches again said initial temperature.

12. Process according to one of the preceding claims, wherein the step of regenerating the adsorbent with the first regeneration stream (E1) is performed at a first pressure in the adsorber and the step of regenerating the adsorbent with a second regeneration stream (E2) is performed at a second pressure in the adsorber below said first pressure.

13. Process according to one of the preceding claims, wherein the step of regenerating the adsorbent with the second regeneration stream (E2) comprises cooling the adsorbent.

14. Process according to one of the preceding claims, wherein the adsorption phase comprises a first step of adsorption comprising providing to a first adsorber, once it is starting the adsorption phase, a portion of the gas mixture, in particular between 5 and 50 % of the gas mixture, preferably between 5 and 20%, and providing to a second adsorber the remainder of the gas mixture, in particular between 50 and 95% of the gas mixture, preferably between 80 and 95%.

15. Process according to the preceding claim, wherein said first step of adsorption is continued until the adsorbent in said first adsorber is substantially saturated with component A.
